# EUROPÄISCHE PATENTANMELDUNG

(11) **EP 2 055 538 A1**
(43) Veröffentlichungstag der Anmeldung: **06.05.2009**
(21) Anmeldenummer: 08017957.5
(22) Anmeldetag: 14.10.2008
(51) Int. Cl.: B60R 21/34

(54) **Fronthaubenscharnier**

(30) Priorität: 31.10.2007 DE 102007052379
(71) Anmelder: Automotive Group ISE Innomotive Systems Europe GmbH, 51702 Bergneustadt (DE)
(72) Erfinder: König, Tim, 51766 Engelskirchen-Ründeroth (DE); Siegert, Viktor, 51580 Reichshof-Eckenhagen (DE); Bogner, Dirk, 44359 Dortmund (DE)
(74) Vertreter: Wenzel & Kalkoff

(57) **Zusammenfassung**

Die Erfindung betrifft ein Fronthaubenscharnier zur gelenkigen Anordnung an einer Fronthaube an einem Fahrzeug, mit einem mit einem Karosseriebauteil verbindbaren unteren Scharnierflügel und einem mit einer Fahrzeughaube verbindbaren oberen Scharnierflügel, wobei der obere und der untere Scharnierflügel über mindestens zwei einenends gelenkig an dem oberen Scharnierflügel angeordnete Lenker miteinander verbunden sind. Um ein Fronthaubenscharnier der eingangs genannten Art bereitzustellen, das sich besonders kostengünstig herstellen lässt, eine hohe Funktionssicherheit aufweist und nur einen geringen Bauraum benötigt ist vorgesehen, dass mindestens einer der Lenker (3, 4) anderenends gelenkig mit einem Überlastlenker (25) verbunden ist, der derart verschwenkbar an dem unteren Scharnierflügel (2) festgelegt ist, dass ein Verschwenken des Überlastlenkers (25) gegenüber dem unteren Scharnierflügel (2) erst bei Erreichen einer vorbestimmten, auf den Überlastlenker (25) wirkenden Last erfolgt, wobei dieser aus einer Normallage in eine Überlastlage bewegt wird.

## Beschreibung

Die Erfindung betrifft ein Fronthaubenscharnier zur gelenkigen Anordnung einer Fronthaube an einem Fahrzeug, mit
- einem mit einem Karosseriebauteil verbindbaren unteren Scharnierflügel und
- einem mit einer Fahrzeughaube verbindbaren oberen Scharnierflügel, wobei
- der obere und der untere Scharnierflügel über mindestens zwei jeweils einenends an dem oberen Scharnierflügel angeordnete Lenker miteinander verbunden sind.

Fronthaubenscharniere der eingangs genannten Art sind bereits in vielfältigen Ausführungsformen aus dem Stand der Technik bekannt. Sie dienen zur schwenkbaren Aufnahme der Fronthaube, bspw. Motorhaube eines Fahrzeugs, die zwischen einer geschlossenen Stellung, in der die Haube in der Regel durch ein Haubenschloss gesichert ist, und einer geöffneten Stellung, in der bspw. der Zugang zu einem unter der Haube angeordneten Motorraum möglich ist verstellt werden kann. Üblicherweise handelt es sich bei den eingesetzten Scharnieren um sogenannten Viergelenk-Scharniere, bei denen ein an der Fronthaube befestigbarer Scharnierflügel und ein an der Fahrzeugkarosserie befestigbarer Scharnierflügel über zwei Lenker gelenkig miteinander verbunden sind.

Zur Verringerung der Schwere von Verletzungen bei Unfällen, die sich mit Personen ereignen, sind vielfältige fahrzeugseitige Ausgestaltungen bekannt, die den Aufprall einer Person auf die Fronthaube abmildern sollen. Neben aktiven Systemen, die im Falle eines Unfalls mit einer Person zusätzlichen Verformungsraum am Fahrzeug bereitstellen sollen, existieren auch passive Systeme, die im Falle einer vorgegebenen Last zu einem Zurückweichen der Fronthaube führen.

Der Erfindung liegt die Aufgabe zugrunde, ein Fronthaubenscharnier der eingangs genannten Art bereitszustellen, das sich besonders kostengünstig herstellen lässt, eine hohe Funktionssicherheit aufweist und nur einen geringen Bauraum benötigt. Die Erfindung löst die Aufgabe durch ein Fronthaubenscharnier mit den Merkmalen des Anspruchs 1. Vorteilhafte Weiterbildungen der Erfindung sind in den abhängigen Ansprüchen angegeben.

Kennzeichnend für das erfindungsgemäße Fronthaubenscharnier, bei welchem der obere und der untere Scharnierflügel über mindestens zwei Lenker gelenkig miteinander verbunden sind ist, dass einer der Lenker anderenends, nämlich mit seinem dem oberen Scharnierflügel gegenüberliegenden Ende gelenkig unmittelbar an einem Überlastlenker angeordnet ist. Der Überlastlenker ist seinerseits verschwenkbar an dem unteren Scharnierflügel festgelegt, wobei jedoch ein Verschwenken des Überlastlenkers gegenüber dem unteren Scharnierflügel nur dann erfolgt, wenn die auf den Überlastlenker wirkende Last einen vorbestimmten Wert übersteigt. Erst in diesem Fall wird der Überlastlenker aus einer Normallage in eine Überlastlage bewegt, in der eine an dem oberen Scharnierflügel befestigte Fahrzeughaube gegenüber der Normallage zurückgesetzt ist.

Die erfindungsgemäße Ausgestaltung des Fronthaubenscharniers gewährleistet in zuverlässiger Weise ein Zurückweichen der Fronthaube im Falle einer Kollision des Fahrzeugs mit einer Person, wenn beim Aufprall der Person auf die Fronthaube die vorbestimmte Last erreicht wird. Durch das Zurückweichen wird die beim Aufprall der Person auf die Fronthaube entstehende Aufprallenergie abgebaut, so dass Verletzungen, insbesondere im Kopfbereich in ihrer Schwere reduziert werden.

Das erfindungsgemäße Fronthaubenscharnier zeichnet sich dabei dadurch aus, dass es gegenüber herkömmlichen Scharnieren, insbesondere Viergelenk-Scharnieren nur einen geringfügig anderen Aufbau aufweist, wobei lediglich ein zusätzlicher Überlastlenker verwendet werden muss. Da der Überlastlenker im Normalbetrieb starr mit dem unteren Scharnierflügel verbunden ist, unterliegt dieser keiner andauernden Bewegung. Funktionsstörungen können somit wirksam vermieden werden.

Die Ausgestaltung der Verbindung zwischen dem unteren Scharnierflügel und dem Überlastlenker derart, dass bei Erreichen einer vorbestimmten Last, welche in Folge des Aufpralls einer Person auf die Fronthaube eintritt, der Überlastlenker verschwenkt und eine an dem oberen Scharnierflügel angeordnete Fahrzeughaube zurückweicht ist grundsätzlich frei wählbar. Nach einer besonders vorteilhaften Ausgestaltung der Erfindung ist der Überlastlenker jedoch neben seiner gelenkigen Verbindung mit dem unteren Scharnierflügel mittels eines Abscherbolzens zusätzlich am unteren Scharnierflügel in der Normallage festgelegt. Die Dimensionierung des Abscherbolzens richtet sich dabei nach der festzulegenden Last, bei der die Fronthaube im Falle eines Aufpralls einer Person zurückweichen soll. Beim Erreichen dieser Last wird der Abscherbolzen abgeschert, so dass der Überlastlenker um seinen Drehpunkt mit dem unteren Scharnierflügel verschwenkt. Dadurch ist dann ein Verschwenken der Fronthaube über die Normallage hinaus in die Überlastlage möglich. Eine derartige Weiterbildung der Erfindung zeichnet sich dabei insbesondere dadurch aus, dass sie besonders kostengünstig ausgeführt werden kann, da nur ein minimaler konstruktiver Aufwand erforderlich ist, um den Überlastlenker mit dem unteren Scharnierflügel über den Abscherbolzen zu verbinden. Es können somit auch herkömmliche Fronthaubenscharniere in einfacher Weise umgerüstet werden.

Eine Begrenzung des Verschwenkungsweges des Überlastlenkers, d. h. eine Festlegung der Überlastlage muss - falls erforderlich - nicht zwangsläufig über das Fronthaubenscharnier erfolgen. Eine Begrenzung der Bewegung kann sich beispielsweise durch am Fahrzeug angeordneten Bauteile ergeben, an denen die Fronthaube in der Überlastlage anliegt. Nach einer weiteren Ausgestaltung der Erfindung sind jedoch der Überlastlenker und/oder der untere Scharnierflügel derart ausgebildet, dass die Verschwenkbewegung des Überlastlenkers gegenüber dem unteren Scharnierflügel begrenzt ist. Eine derartige Ausgestaltung der Erfindung ermöglicht eine fahrzeugtypenabhängige Beschränkung der Verschwenkbewegung, d. h. eine Festlegung der Überlastlage. Hierdurch wird in besonders zuverlässiger Weise erreicht, dass sich das Fronthaubenscharnier nicht gegen die Wirkrichtung aufstellen kann, was im Funktionsfalle, nämlich beim Aufprall einer Person, zu einer entgegengesetzten Wirkung, nämlich zu einer Erhöhung des Risikos gefährlicher Verletzungen führen kann.

Die Ausgestaltung der Begrenzung der Verschwenkbewegung, d. h. der Festlegung der Überlastlage ist grundsätzlich frei wählbar, wobei beispielsweise am oberen Scharnierflügel und am unteren Scharnierflügel in der Überlastlage miteinander in Eingriff bringbare Anschläge angeordnet sein können. Nach einer besonders vorteilhaften Ausgestaltung der Erfindung ist an dem Überlastlenker jedoch ein mit dem unteren Scharnierflügel in Eingriff bringbarer Führungsbolzen angeordnet. Eine Anordnung des Führungsbolzens am Überlastlenker weist den Vorteil auf, dass der im Normalbetrieb verschwenkbare obere Scharnierflügel nicht mit einem zusätzlichen Anschlag oder anderweitigen Bauteilen ausgestattet werden muss, was möglicherweise konstruktive Umgestaltungen im Bewegungsbereich des oberen Scharnierflügels erforderlich machen würde. Gemäß dieser Ausführungsform der Erfindung ist der Führungsbolzen ortsfest am Überlastlenker und damit am Fronthaubenscharnier angeordnet und kommt lediglich im Lastfall mit dem unteren Scharnierflügel in Eingriff und begrenzt damit den Verschwenkbereich des Überlastlenkers. Der Führungsbolzen dient dabei als Anschlagbolzen.

Die Ausgestaltung des Zusammenwirkens des Führungsbolzens mit dem unteren Scharnierflügel ist ebenfalls frei wählbar. Besonders vorteilhafterweise ragt der Führungsbolzen in einen in dem unteren Scharnierflügel angeordneten Schlitz. Der Schlitz begrenzt damit den Bewegungsraum des Überlastlenkers, wobei der Führungsbolzen in der Überlastlage an einem unteren Ende des Schlitzes anliegt. Die Verwendung eines Schlitzes lässt sich in besonders einfacher Weise realisieren, so dass die Herstellungskosten des Fronthaubenscharniers durch diese Ausgestaltung in ergänzender Weise reduziert werden könne, wobei die Funktionssicherheit gesteigert wird.

Um die Funktion des erfindungsgemäßen Fronthaubenscharniers zu gewährleisten, ist es erforderlich, dass die Fronthaube in Wirkverbindung mit dem Überlastlenker steht. Nach einer besonders vorteilhaften Ausgestaltung der Erfindung liegt dabei der obere Scharnierflügel, der zur Aufnahme der Fronthaube dient, in einer geschlossenen Stellung des Fronthaubenscharniers an einem Anschlag des Überlastlenkers an. Diese Ausgestaltung der Erfindung gewährleistet, dass im Falle eines Aufpralls einer Person die dabei auftretende Last unmittelbar von der Fronthaube über den oberen Scharnierflügel auf den Überlastlenker übertragen wird. Sollte die auftretende Last dabei den zuvor festgelegten Wert überschreiten, wird der Überlastlenker von der Normallage in die Überlastlage überführt. Aufgrund der bestehenden starren Verbindung zwischen dem oberen Scharnierflügel und der Fronthaube wird dabei in besonders zuverlässiger Weise gewährleistet, dass bei Erreichen der vorbestimmten Last ein Zurückweichen der Fronthaube erfolgt.

Nach einer weiteren Ausgestaltung der Erfindung ist dabei der Anschlag einstellbar. Die Einstellbarkeit kann dabei in beliebiger Weise realisiert werden und ermöglicht eine einfache Einstellung der Konstruktionslage des Fronthaubenscharniers. Darüber hinaus wird eine an dem Fronthaubenscharnier angeordnete Fronthaube in ihrer geschlossenen, in der Regel durch ein Haubenschloss verriegelten Stellung durch den Anschlag unter einer Vorspannung gehalten, wodurch ein Flattern der Fronthaube in Folge des Fahrtwinds vermieden wird. Die Einstellbarkeit kann dabei beispielsweise durch eine Einschraubbarkeit des Anschlags in den Überlastlenker erreicht werden.

Ein Ausführungsbeispiel der Erfindung wird nachstehend mit Bezug auf die Zeichnungen näher erläutert. In den Zeichnungen zeigen:
- Fig. 1: eine perspektivische Ansicht einer Ausführungsform eines Fronthaubenscharniers;
- Fig. 2: eine Seitenansicht des Fronthaubenscharniers von Fig. 1 in einer Öffnungslage;
- Fig. 3: eine Seitenansicht des Fronthaubenscharniers von Fig. 1 in einer geschlossenen Stellung und
- Fig. 4: eine Seitenansicht des Fronthaubenscharniers von Fig. 1 in einer Überlastlage eines Überlastlenkers.

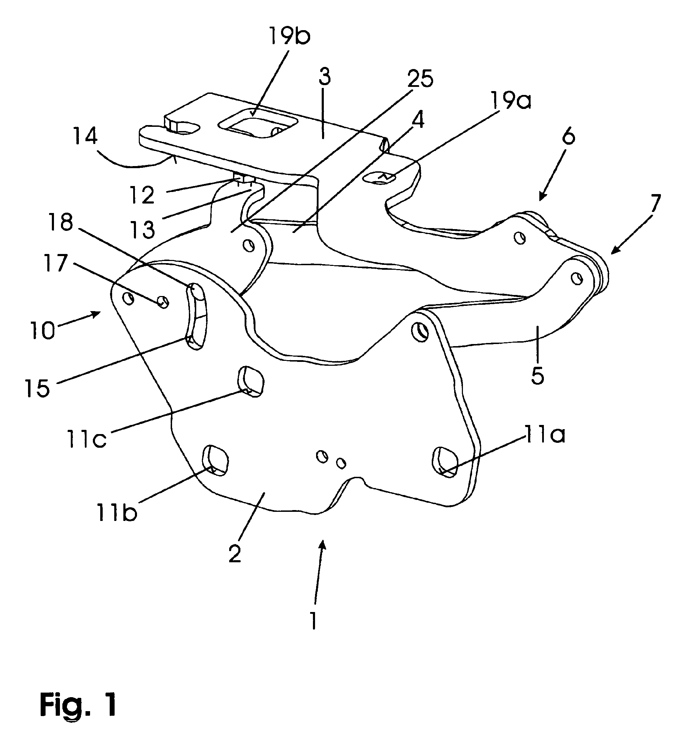

Figur 1 zeigt eine Ausführungsform eines Fronthaubenscharniers 1 zur Anordnung einer hier nicht dargestellten Fronthaube an einer hier ebenfalls nicht dargestellten Fahrzeugkarosserie. Das Fronthaubenscharnier 1 weist einen unteren Scharnierflügel 2 auf, welcher zur Anordnung des Fronthaubenscharniers 1 an der Fahrzeugkarosserie dient. Hierzu weist der untere Scharnierflügel 2 Befestigungsöffnungen 11a, 11b, 11c auf, welche zur Aufnahme von Befestigungselementen, beispielsweise Schrauben dienen, mittels derer das Fronthaubenscharnier 1 an der Fahrzeugkarosserie befestigt wird.

Im Gegensatz zu üblichen Viergelenk-Scharnieren, welche in der Regel zur Anordnung von Fronthauben verwendet werden, ist der untere Scharnierflügel 2 mit einem Überlastlenker 25 in einem Drehpunkt 10 über einen Gelenkbolzen 24 mit dem unteren Scharnierflügel 2 verbunden. Im Normalbetrieb ist der Überlastlenker 25 über einen Abscherbolzen 16, welcher sich in eine Aufnahme 17 in dem unteren Schanierflügel 2 erstreckt, starr mit dem unteren Scharnierflügel 2 verbunden. Eine Verschwenkbewegung der Fronthaube gegenüber der Fahrzeugkarosserie wird im Normalbetrieb über zwei Lenker 4, 5 bestimmt, welche einenends in zwei Drehpunkten 6, 7 über zwei Gelenkbolzen 20, 21 mit einem oberen Scharnierflügel 3 verbunden sind. Anderenends ist der Lenker 5 in einem Drehpunkt 8 über einen Gelenkbolzen 22 direkt mit dem unteren Scharnierflügel 2 verbunden. Der Lenker 4 ist anderenends mit dem Überlastlenker 25 in einem Drehpunkt 9 über einen Gelenkbolzen 23 mit dem unteren Scharnierflügel 2 verbunden.

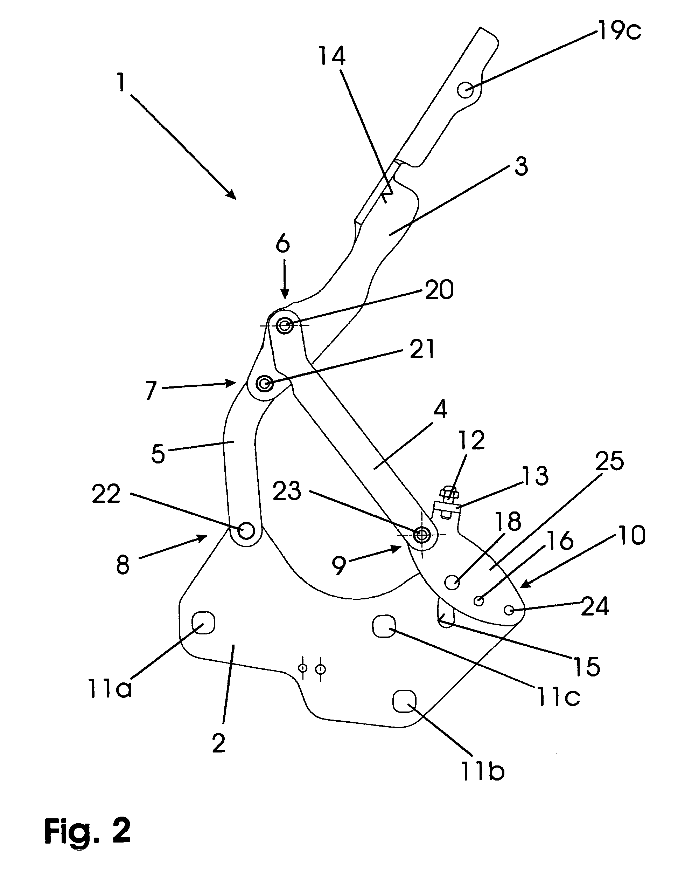

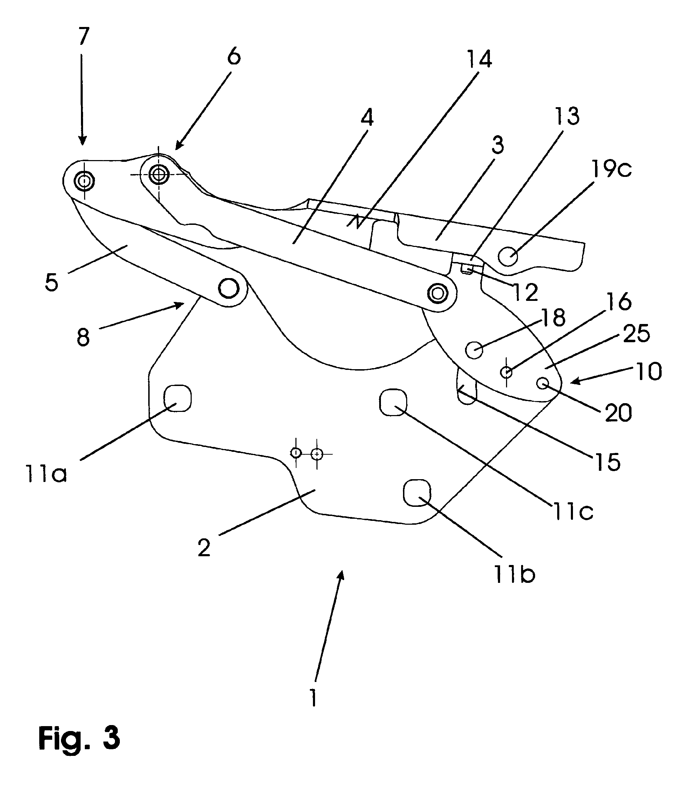

Im Normalbetrieb ist das Fronthaubenscharnier 1 somit zwischen der in Fig. 2 dargestellten geöffneten und der in Fig. 3 dargestellten geschlossenen Stellung verstellbar, wobei sich der Überlastlenker 25 im Normalbetrieb ständig in der Normallage befindet, welche durch den Abscherbolzen 16 festgelegt ist. In der geschlossenen Stellung des Fronthaubenscharniers 1 liegt der obere Scharnierflügel 3, welcher über Befestigungsöffnungen 19a, 19b, 19c mit der hier nicht dargestellten Fronthaube verbunden ist mit seiner Unterseite 14 an einem an dem Überlastlenker 25 angeordneten Anschlagelement 12 an. Das Anschlagelement 12 ist dabei zur Einstellbarkeit der Position der Fronthaube in einen Flansch 13 des Überlastlenkers 25 einschraubbar.

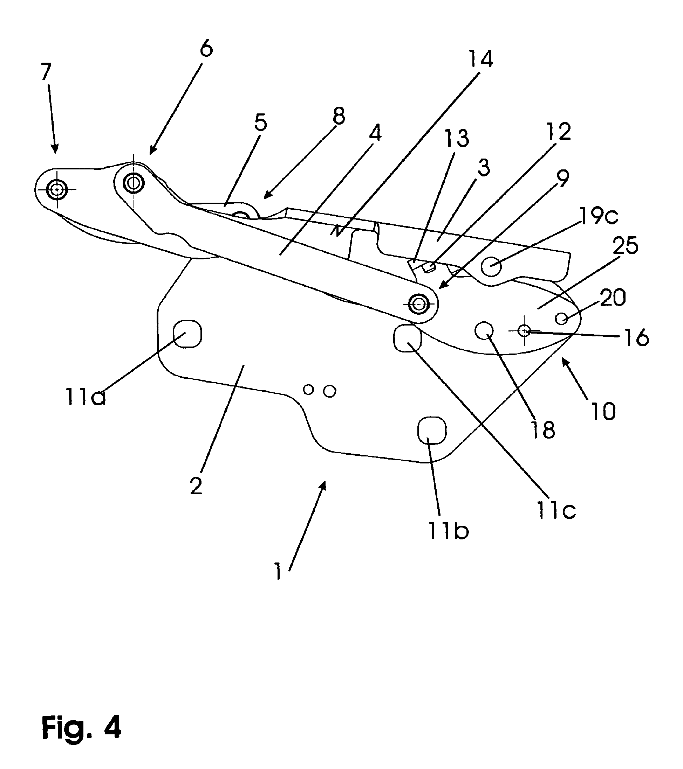

Im Falle eines Aufpralls einer Person auf die Fronthaube wird die Aufprallenergie über die Fronthaube auf den oberen Scharnierflügel 3 übertragen. Von dem oberen Scharnierflügel 3 wird die Energie über das Anschlagelement 12 auf den Überlastlenker 25 übertragen. Bei Erreichen einer vorbestimmten Last wird der Abscherbolzen 16 abgeschert, so dass der Überlastlenker 25 aus der in Fig. 3 dargestellten geschlossenen Position in die in Fig. 4 dargestellte Position gelangt, in der der Überlastlenker 25 aus der Normallage in eine Überlastlage überführt ist. In der Überlastlage des Überlastlenkers 25 befindet sich die Fronthaube in einer gegenüber der Normallage zurückgewichenen Position, wodurch die Aufprallenergie abgemildert wird. Zur Beschränkung des Bewegungsbereiches des Überlastlenkers 25 weist dieser einen Führungsbolzen 18 auf, der in einen Schlitz 15 des unteren Scharnierflügels 2 eingreift. Die Überlastlage des Überlastlenkers 25 wird dabei dann erreicht, wenn der Führungsbolzen 18 an einem unteren Ende des Schlitzes 15 anliegt.

## Patentansprüche

1. Fronthaubenscharnier zur gelenkigen Anordnung an einer Fronthaube an einem Fahrzeug, mit
- einem mit einem Karosseriebauteil verbindbaren unteren Scharnierflügel (2) und
- einem mit einer Fahrzeughaube verbindbaren oberen Scharnierflügel (3), wobei
- der obere und der untere Scharnierflügel (2, 3) über mindestens zwei jeweils einenends gelenkig an dem oberen Scharnierflügel (3) angeordnete Lenker (4, 5) miteinander verbunden sind,
**dadurch gekennzeichnet, dass** einer der Lenker (4, 5) anderenends gelenkig unmittelbar an einem Überlastlenker (25) angeordnet ist, der derart verschwenkbar unmittelbar an dem unteren Scharnierflügel (2) festgelegt ist, dass ein Verschwenken des Überlastlenkers (25) gegenüber dem unteren Scharnierflügel (2) erst bei Erreichen einer vorbestimmten, auf den Überlastlenker (25) wirkenden Last erfolgt, wobei dieser aus einer Normallage in eine Überlastlage bewegt wird, wobei der andere Lenker (4, 5) anderenends gelenkig unmittelbar mit dem unteren Scharnierflügel (2) verbunden ist.

2. Fronthaubenscharnier nach Anspruch 1, **dadurch gekennzeichnet, dass** der Überlastlenker (25) mittels eines Abscherbolzens (16) an dem unteren Scharnierflügel (2) in der Normallage festgelegt ist.

3. Fronthaubenscharnier nach Anspruch 1 oder 2, **dadurch gekennzeichnet, dass** der Überlastlenker (25) und/oder der untere Scharnierflügel (2) derart ausgebildet sind, dass die Verschwenkbewegung des Überlastlenkers (25) gegenüber dem unteren Scharnierflügel (2) begrenzt ist.

4. Fronthaubenscharnier nach einem oder mehreren der vorhergehenden Ansprüche, **dadurch gekennzeichnet, dass** an dem Überlastlenker (25) ein mit dem unteren Scharnierflügel (2) in Eingriff bringbarer Führungsbolzen (18)angeordnet ist.

5. Fronthaubenscharnier nach einem oder mehreren der vorhergehenden Ansprüche, **dadurch gekennzeichnet, dass** der Führungsbolzen (18) in einen in dem unteren Scharnierflügel (2) angeordneten Schlitz (15) hineinragt.

6. Fronthaubenscharnier nach einem oder mehreren der vorhergehenden Ansprüche, **dadurch gekennzeichnet, dass** der obere Scharnierflügel (3) in der geschlossenen Stellung des Fronthaubenscharniers (1) an einem Anschlag (12) des Überlastlenkers (24) anliegt.

7. Fronthaubenscharnier nach einem oder mehreren der vorhergehenden Ansprüche, **dadurch gekennzeichnet, dass** der Anschlag (12) einstellbar ist.
